(19) Europäisches Patentamt

European Patent Office

Office européen des brevets

(11) **EP 2 612 185 B1**

(12) **FASCICULE DE BREVET EUROPEEN**

(45) Date de publication et mention de la délivrance du brevet:
**26.07.2017 Bulletin 2017/30**

(21) Numéro de dépôt: **11749437.7**

(22) Date de dépôt: **01.09.2011**

(51) Int Cl.:
*G02B 6/122* (2006.01)     *G02B 1/00* (2006.01)

(86) Numéro de dépôt international:
**PCT/EP2011/065069**

(87) Numéro de publication internationale:
**WO 2012/028672 (08.03.2012 Gazette 2012/10)**

(54) **DISPOSITIF A CRISTAL PHOTONIQUE PLANAIRE A DISPERSION CONTROLEE**

PLANARE PHOTONISCHE KRISTALLANORDNUNG MIT KONTROLLIERTER DISPERSION

FLAT PHOTONIC CRYSTAL DEVICE WITH CONTROLLED DISPERSION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.09.2010 FR 1003525**

(43) Date de publication de la demande:
**10.07.2013 Bulletin 2013/28**

(73) Titulaire: **THALES**
**92400 Courbevoie (FR)**

(72) Inventeurs:
• **COLMAN, Pierre**
**75015 Paris (FR)**
• **DE ROSSI, Alfredo**
**75014 Paris (FR)**
• **COMBRIE, Sylvain**
**75014 Paris (FR)**

(74) Mandataire: **Bréda, Jean-Marc et al**
**Marks & Clerk France**
**Conseils en Propriété Industrielle**
**Immeuble " Visium "**
**22 Avenue Aristide Briand**
**94117 Arcueil Cedex (FR)**

(56) Documents cités:
• **JING MA ET AL: "Flatband Slow Light in Asymmetric Line-Defect Photonic Crystal Waveguide Featuring Low Group Velocity and Dispersion", IEEE JOURNAL OF QUANTUM ELECTRONICS, IEEE SERVICE CENTER, PISCATAWAY, NJ, USA, vol. 44, no. 8, 1 août 2008 (2008-08-01), pages 763-769, XP011229254, ISSN: 0018-9197, DOI: DOI:10.1109/JQE.2008.924237**
• **TANAKA Y ET AL: "A Polarization Diversity Two-Dimensional Photonic-Crystal Device", IEEE JOURNAL OF SELECTED TOPICS IN QUANTUM ELECTRONICS, IEEE SERVICE CENTER, PISCATAWAY, NJ, US, vol. 16, no. 1, 1 janvier 2010 (2010-01-01), pages 70-76, XP011283203, ISSN: 1077-260X, DOI: DOI:10.1109/JSTQE.2009.2026588**
• **JING MA ET AL: "Demonstration of Ultraslow Modes in Asymmetric Line-Defect Photonic Crystal Waveguides", IEEE PHOTONICS TECHNOLOGY LETTERS, IEEE SERVICE CENTER, PISCATAWAY, NJ, US, vol. 20, no. 14, 15 juillet 2008 (2008-07-15), pages 1237-1239, XP011228305, ISSN: 1041-1135, DOI: DOI:10.1109/LPT.2008.926018**

**Description**

Le domaine de l'invention est celui des circuits optiques intégrés et plus particulièrement de ceux basés sur des structures à cristaux photoniques planaires.

Ces structures permettent, au travers d'un fort confinement, de rendre les fonctions optiques plus compactes et d'en faciliter l'intégration, d'exalter des phénomènes d'interaction non-linéaire jusqu'alors hors de portée des niveaux de puissance utilisés, de contrôler la propagation des ondes guidées, ... Ces propriétés sont particulièrement intéressantes pour réaliser des dispositifs compacts et à faible consommation pour des applications telles que le traitement tout-optique du signal, le contrôle de la dispersion optique, la compression d'impulsions issues de sources laser, la génération et la conversion de fréquences otiques, l'échantillonnage optique, la commande d'antennes, les interconnexions tout-optique.

Le domaine d'application préférentiel des structures selon l'invention est celui des lignes à retard optique. Ces lignes à retard sont habituellement réalisées à l'aide de fibres optiques dont la longueur peut atteindre jusqu'à une centaine de mètres. La structure périodique des cristaux photoniques permet d'atteindre des dispersions chromatiques notées $\beta 2_{CPh}$ bien plus grandes que celles des fibres optiques notées $\beta 2_{Fibre}$. Le rapport entre les deux dispersions peut dépasser 100 000. Ainsi, un seul millimètre de cristal photonique à une dispersion équivalente à celle de cinquante mètres de fibre optique. Celle-ci peut de plus être contrôlée, le $\beta 2_{CPh}$ pouvant aller de -6ps$^2$/mm à +6ps$^2$/mm. De plus, en modifiant les paramètres de structure des cristaux photoniques, il est possible de contrôler à la fois l'indice de groupe et la dispersion, en particulier celle d'ordre 2 et 3, ce que ne permettent pas les fibres optiques.

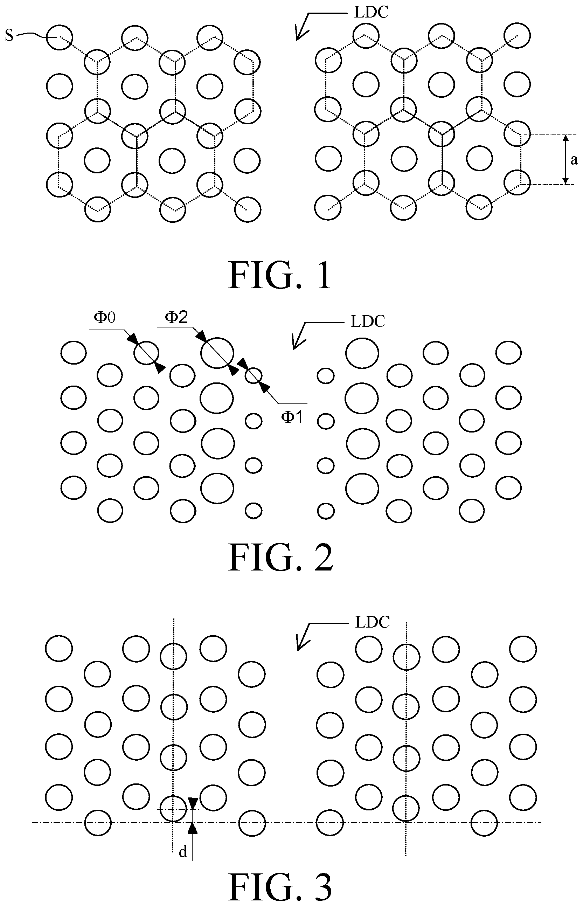

Un guide d'onde optique à cristal photonique planaire est essentiellement une couche mince comportant un réseau de structures nanométriques. Généralement, le réseau est constitué de lignes de trous circulaires et équidistants disposées de façon symétrique autour d'un axe central ou « ligne de défauts centrale » (LDC) ne comportant pas de trous et assurant la propagation des modes optiques. Une telle configuration est représentée en figure 1. Dans la configuration de la figure 1, les trous ou structures S forment un réseau hexagonal représenté en pointillés autour de la « ligne de défauts centrale » LDC. Le pas du réseau, c'est-à-dire la distance séparant deux trous, vaut sensiblement a sur cette figure et les suivantes. Comme il a été dit, une des propriétés de cette structure est d'avoir une dispersion optique très importante.

Il existe différentes techniques visant à modifier et à contrôler la dispersion d'un guide à cristal photonique planaire. Celles-ci reposent essentiellement soit sur une modification du diamètre des trous, soit sur une modification symétrique de leurs positions de part et d'autre de la « ligne de défauts centrale ». Lors du passage d'un régime de guidage du mode par l'indice à celui par réseau de Bragg, on assiste à une modification de l'enveloppe du mode guidé et en particulier à son étalement spatial. Cette propriété a été jusqu'à présent mise à profit pour contrôler la dispersion car tout changement de la structure modifie l'évolution du recouvrement du mode avec celle-ci et ainsi la courbure de la dispersion.

Une première publication intitulée « Photonic crystal waveguides with semi-slow light and tailored dispersion properties » de L.H. Frandsen and al - Optics Express - Vol. 14, N° 20 - 2 octobre 2006 donne un premier exemple d'un cristal photonique de ce type. Dans cette structure représentée en figure 2, les premières lignes de trous qui se trouvent de part et d'autre de la « ligne de défauts » ont un diamètre $\phi 1$ inférieur à celui $\phi 0$ des trous du reste de la structure. A l'inverse, les secondes lignes de trous qui se trouvent de part et d'autre de la « ligne de défauts » ont un diamètre $\phi 2$ supérieur à celui $\phi 0$ des trous du reste de la structure. Comme on le voit sur cette figure, le cristal est parfaitement symétrique.

Une seconde publication intitulée « Slow light with low dispersion and nonlinear enhancement in a lattice-shifted photonic crystal waveguides » de Y. Hamachi and al - Optics Letters - Vol.34, N° 7 - 26 mars 2009 donne un second exemple d'un cristal photonique de ce type. Dans cette structure représentée en figure 3, les troisièmes lignes de trous reliés par des lignes en pointillés sur cette figure et qui se trouvent de part et d'autre de la « ligne de défauts centrale» sont décalées symétriquement par rapport à l'ordre hexagonal du reste de la structure d'uns distance d.

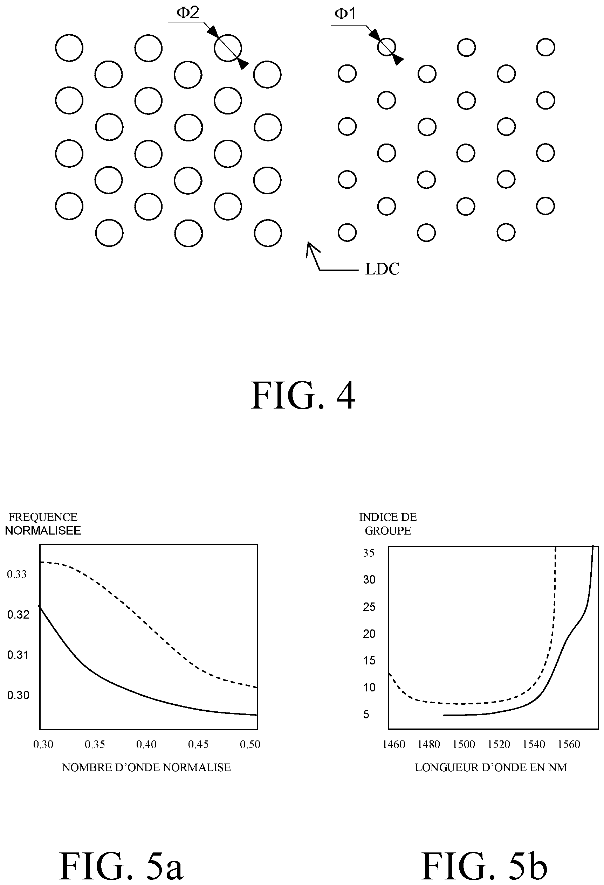

Une troisième publication intitulé « Flat band slow light in asymmetric photonic crystal waveguide based on microfluidic infiltration » de S. Lü et al - Applied Optics - Vol. 49, N° 20 - 10 juillet 2010 donne un troisième exemple de cristal photonique. Dans cette structure représentée en figure 4, les trous nanométriques ont des diamètres différents $\phi 1$ et $\phi 2$ de part et d'autre de la « ligne de défauts centrale » LDC. La publication intitulée « Démonstration of Ultraslow Modes in Asymmetric Line-Defect Photonic Crystal Waveguides» de J. Ma et al. - IEEE Photonics Technology Letters - Vol. 20, N° 14 - 15 juillet 2008 donne un exemple d'un cristal photonique asymétrique. Une des limitations des techniques basées sur le principe de recouvrement du mode réside dans la difficulté à contrôler précisément lors de la fabrication tous les paramètres de la structure modifiée. En effet, l'écriture des motifs est réalisée par lithographie électronique ou optique. Les « effets de proximité » dues aux modifications de diamètres ou de position des trous influent sur la taille des trous voisins.

Le dispositif à cristal photonique planaire à dispersion contrôlée selon l'invention repose sur une brisure de symétrie dont l'impact n'est que peu influencé par les tolérances de fabrication. L'asymétrie de la structure entraîne une hybridation des modes de propagation pairs et impairs. Leur répulsion, issue de la brisure de symétrie, permet de contrôler la dispersion des modes. Plus grande est l'asymétrie, plus fort est l'effet d'hybridation. Ainsi, contrairement aux autres méthodes, la méthode d'hybridation des modes permet de repousser des bandes d'ordre supérieur en dehors de la zone d'intérêt et de pouvoir ainsi réaliser des guides larges mais monomodes. Les guides selon l'invention permettent de réaliser de manière robuste des dispersions « à la carte » particulièrement utiles pour des fonctions telles que la compensation de dispersion, les retards très larges bandes, la conversion de fréquence par mélange à quatre ondes, la compression d'impulsion, ...

Plus précisément, l'invention a pour objet un dispositif optique selon la revendication 1. Avantageusement, les structures de chaque ligne L_J sont équidistantes, lesdites structures étant séparées d'une distance a prédéterminée et constante et, les lignes L_J sont équidistantes, séparées d'une distance $\frac{a.\sqrt{3}}{2}$ prédéterminée et constante.

Avantageusement, les structures de chaque ligne L_J sont séparées d'une distance a variable, la variation $\Delta a$ de la distance a entre deux structures consécutives étant d'un ordre de grandeur inférieur à ladite distance a.

Avantageusement, les paramètres a et b sont des constantes.

Avantageusement, les structures nanométriques sont des trous circulaires de dimension identique ou de dimension différente.

Préférentiellement, le diamètre des trous est compris 0.15a et 0.38a.

L'invention sera mieux comprise et d'autres avantages apparaîtront à la lecture de la description qui va suivre donnée à titre non limitatif et grâce aux figures annexées parmi lesquelles :

La figure 1 déjà commentée représente un guide d'onde optique à cristal photonique planaire totalement symétrique comportant un réseau de structures nanométriques toutes identiques ;
Les figures 2, 3 et 4 également commentées représentent différentes configurations de guides d'onde optique à cristal photonique planaire selon l'art antérieur permettant de modifier la dispersion spectrale ;
La figure 5a représente la variation de fréquence normalisée en fonction du nombre d'onde normalisée pour les modes pair et impair dans un guide d'onde à cristal photonique symétrique selon l'art antérieur ;
La figure 5b représente la variation de l'indice de groupe en fonction de la longueur d'onde pour les modes pair et impair dans un guide d'onde à cristal photonique symétrique selon l'art antérieur ;
La figure 6 représente un guide d'onde optique à cristal photonique planaire selon l'invention ;
La figure 7a représente la variation de fréquence normalisée en fonction du nombre d'onde normalisée pour les modes pair et impair dans un guide d'onde à cristal photonique asymétrique selon l'invention ;
La figure 7b représente la variation de l'indice de groupe en fonction de la longueur d'onde pour les modes pair et impair dans un guide d'onde à cristal photonique asymétrique selon l'invention ;
La figure 8 représente le retard introduit par un guide d'onde à cristal photonique selon l'invention en fonction de la longueur d'onde pour quatre valeurs du paramètre de déplacement b.

On sait que, dans un guide d'onde optique à cristal photonique planaire tel que représenté en figure 1, deux modes pair et impair sont susceptibles de se propager le long de la « ligne de défauts centrale ». Les courbes des figures 5a et 5b représentent respectivement :

- la variation de fréquence normalisée en fonction du nombre d'onde normalisé pour les modes pair et impair dans un guide d'onde à cristal photonique symétrique ;
- la variation de l'indice de groupe en fonction de la longueur d'onde pour les modes pair et impair dans le même guide d'onde à cristal photonique symétrique.

La fréquence normalisée F_NORM vérifie la relation classique : $F_{NORM} = \frac{\omega.a}{2\pi.c}$ avec $\omega$: pulsation de l'onde de propagation à travers le cristal photonique, a : pas du réseau du cristal photonique, c : célérité de la lumière ; et le nombre d'onde normalisé K_NORM vérifie la relation classique : $k_{NORM} = \frac{2\pi}{a}$ avec les mêmes notations.

La dépendance de l'indice de groupe en fonction de la longueur d'onde présente une divergence typique mais n'est pas contrôlée.

Le principe général du dispositif à cristal photonique selon l'invention repose sur l'hybridation ou le couplage du mode pair avec le mode impair par une modification de la structure brisant la symétrie par rapport à l'axe du guide.

Plus précisément, un dispositif optique selon l'invention comporte au moins un cristal photonique planaire comportant un réseau sensiblement périodique et hexagonal de structures nanométriques, chaque structure élémentaire étant référencée dans un repère (x, y), le réseau comportant une ligne dite « ligne de défauts centrale » ne comportant pas de structures nanométriques, cette ligne étant centrée selon l'axe x, chaque structure S_IJ étant centrée en un point C_IJ de coordonnées (x_CIJ, y_CIJ), à chaque structure nanométrique appartenant au demi-plan tel que y soit positif correspondant une structure nanométrique appartenant au demi-plan tel que y soit négatif. I et J étant des nombres entiers relatifs représentant des indices. Dans le cristal selon l'invention, au moins une structure nanométrique dont le centre $C_{IJ}$ a comme coordonnées $(x_{CIJ}, y_{CIJ})$ correspond une structure nanométrique dont le centre a comme coordonnées $(x'_{CIJ}, y'_{CIJ})$ tels que $x'_{CIJ}$ soit différent de $x_{CIJ}$ ou que $y'_{CIJ}$ soit différent de $-y_{CIJ}$, la symétrie du réseau par rapport à l'axe x étant ainsi brisée.

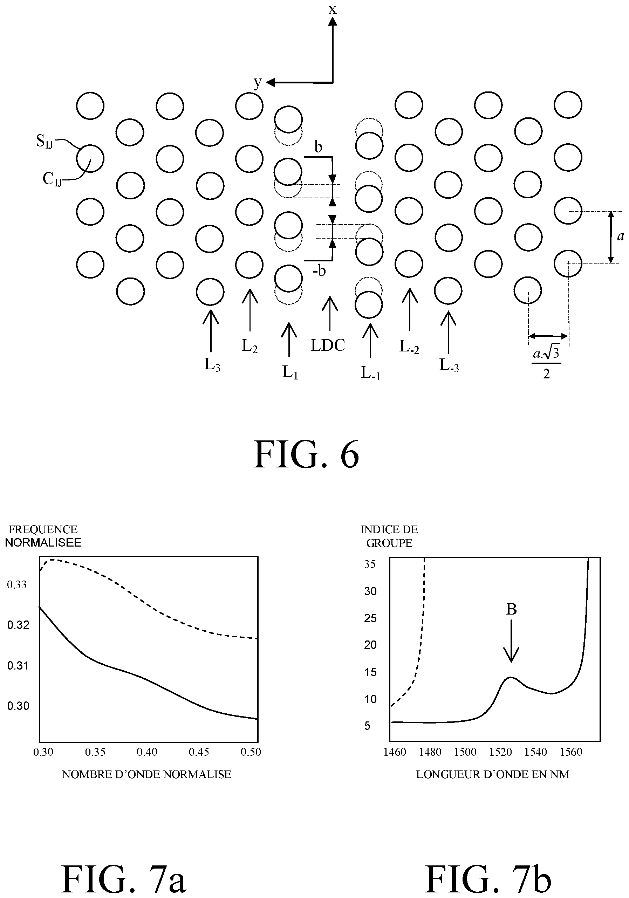

A titre d'exemple non limitatif, la figure 6 représente un mode de réalisation d'un cristal photonique selon l'invention. Il comporte un réseau sensiblement hexagonal de structures nanométriques $S_{IJ}$. Le réseau comporte une pluralité de lignes $L_J$ de ces structures qui sont des trous circulaires dans le cas de la figure 6. Les lignes sont parallèles entre elles et parallèles à l'axe x, chaque ligne comprend des structures équidistantes, séparées d'une distance a. A chaque ligne $L_J$ appartenant au demi-plan tel que y soit positif correspond une ligne $L_{-J}$ appartenant au demi-plan tel que y soit négatif. Par exemple, comme on le voit sur la figure 6, à la ligne $L_2$ correspond la ligne symétrique $L_{-2}$ et à la ligne $L_3$ correspond la ligne symétrique $L_{-3}$. Dans le cas de la figure 6, les lignes $L_J$ sont équidistantes et séparées d'une distance $\dfrac{a.\sqrt{3}}{2}$ constante. Il existe au moins une ligne $L_J$ de structures nanométriques $S_{IJ}$ dont les centres ont comme valeur d'ordonnée commune $y_J$ et comme valeurs d'abscisse k*a+b, à ladite ligne $L_J$, correspond une ligne $L_{-J}$ de structures nanométriques $S_{I-J}$ dont les centres ont comme valeur d'ordonnée commune $-y_J$ et comme valeurs d'abscisse k*a-b, k étant un entier relatif et b une dimension inférieure à la moitié de a. Dans le cas de la figure 6, les deux premières lignes $L_1$ et $L_{-1}$ vérifient cette propriété et sont décalées respectivement de b et de -b.

Sur la figure 6, tous les trous ont le même diamètre. Mais, on peut envisager des guides dont les trous ont des diamètres différents. Par exemple, les trous d'une rangée particulière de trous peuvent tous être identiques et de diamètre différent de celui des trous de la rangée voisine. Préférentiellement, le diamètre des trous est compris 0.15a et 0.38a.

Les diagrammes des figures 7a et 7b sont associés à cette configuration particulière. Comme les figures 5a et 5b, ils représentent respectivement :

-    la variation de fréquence normalisée en fonction du nombre d'onde normalisé pour les modes pair et impair dans un guide d'onde à cristal photonique symétrique ;

-    la variation de l'indice de groupe en fonction de la longueur d'onde pour les modes pair et impair dans le même guide d'onde à cristal photonique symétrique.

En comparant ces diagrammes avec ceux des figures 5a et 5b, l'effet relatif d'une telle modification est immédiat. La brisure de symétrie permet d'une part de repousser le mode impair au-delà de la zone d'intérêt et d'autre part, de faire apparaître sur l'indice de groupe une bosse B suivie d'un plateau, illustrant la modification de la dispersion.

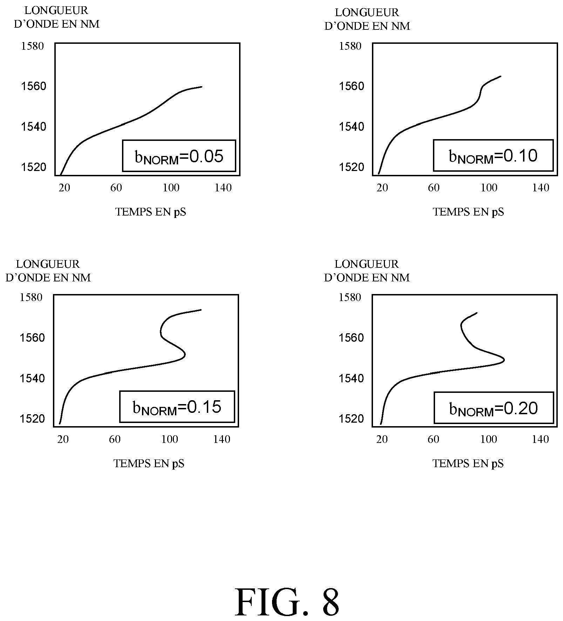

La figure 8 représente l'évolution de la dispersion ou du retard optique exprimé en picosecondes en fonction de la longueur d'onde pour 4 valeurs normalisées $b_{NORM} = \dfrac{b}{a}$ du paramètre b. Ces valeurs sont 0.05, 0.10, 0.15 et 0.20. Ainsi, la valeur du déplacement longitudinal b, en modifiant le degré d'hybridation, permet le contrôle de la dispersion.

Dans le dispositif de la figure 6, les structures de chaque ligne $L_J$ sont équidistantes et séparées d'une distance a prédéterminée et constante. Il est également possible de réaliser des structures à pas non constant, la distance a étant variable. Cependant, la variation $\Delta a$ de la distance a entre deux structures consécutives doit continuer de se faire de façon « adiabatique », c'est-à-dire rester d'un ordre de grandeur inférieur à la distance a de façon que la propagation des modes puisse se faire dans de bonnes conditions.

Parmi les avantages du dispositif selon l'invention, on citera :

-    Le principe d'hybridation, en repoussant les modes de parité opposée, permet d'élargir les bandes d'utilisation de certains guides en cristal photonique. Ceci peut, par exemple, s'avérer utile pour rendre monomode des guides larges qui par essence sont multimodes ;

-    Cette solution technique est potentiellement plus robuste et tolérante que les solutions proposées jusqu'alors ;

-    Les méthodes antérieures de contrôle de la dispersion sont basées une modification structurelle qui permet de modifier le recouvrement du mode avec la structure. Dans le régime guidé par l'indice, le mode est principalement localisé au centre du guide ; les propriétés de propagation de celui-ci ne dépendent principalement que de la géométrie de la première rangée de trous. En passant en régime de Bragg, la configuration du mode est modifiée, son étalement fait qu'il est alors aussi sensible aux rangées suivantes. La modification de la géométrie relative des différentes rangées permet d'ajuster finement la dispersion.

**Revendications**

1.    Dispositif optique comportant au moins un cristal photonique planaire comportant un arrangement périodique et hexagonal de structures nanométriques, chaque structure élémentaire étant référencée dans un repère (x, y), le réseau comportant une ligne dite « ligne de défauts centrale » ne comportant pas de structures nanométriques, cette ligne étant centrée selon l'axe x, chaque structure $S_{IJ}$ étant centrée en un point $C_{IJ}$ de coordonnées ($x_{CIJ}$, $y_{CIJ}$), à chaque structure nanométrique appartenant au demi-plan tel que y soit positif correspondant une structure nanométrique appartenant au demi-plan tel que y soit négatif,

le réseau comportant une pluralité de lignes $L_J$ de structures nanométriques $S_{IJ}$ dont les centres ont comme valeur d'ordonnée commune $y_J$, les lignes étant parallèles entre elles et parallèles à l'axe x, à chaque ligne $L_J$ d'ordonnée commune $y_J$ positive correspond une ligne $L_{-J}$ d'ordonnée commune $y_{-J}$ négative et de même valeur absolue que $y_J$ avec au moins une première ligne $L_1$ de structures nanométriques $S_{I1}$ dont les centres ont comme valeur d'ordonnée commune $y_1$ et comme valeurs d'abscisse $k_1$*a+b, à ladite première ligne $L_1$, correspond une première ligne $L_{-1}$ de structures nanométriques $S_{I-1}$ dont les centres ont comme valeur d'ordonnée commune $y_{-1}$ et comme valeurs d'abscisse $k_1$*a-b, avec au moins une seconde ligne $L_3$ de structures nanométriques $S_{I3}$ dont les centres ont comme valeur d'ordonnée commune $y_3$ et comme valeurs d'abscisse $k_2$*a, à ladite seconde ligne $L_3$, correspond une seconde ligne $L_{-3}$ de structures nanométriques $S_{I-3}$ dont les centres ont comme valeur d'ordonnée commune $y_{-3}$ et comme valeurs d'abscisse $k_2$*a, $k_1$ et $k_2$ étant des entiers relatifs et b une dimension inférieure à la moitié de a, la symétrie du réseau par rapport à l'axe x étant ainsi brisée.

2. Dispositif optique comportant au moins un cristal photonique planaire selon la revendication 1, **caractérisé en ce que**, d'une part, les structures de chaque ligne $L_J$ sont équidistantes, lesdites structures étant séparées d'une distance a prédéterminée et constante et que d'autre part, les lignes $L_J$ sont équidistantes, séparées d'une distance $\dfrac{a.\sqrt{3}}{2}$ prédéterminée et constante.

3. Dispositif optique comportant au moins un cristal photonique planaire selon la revendication 1, **caractérisé en ce que** les structures de chaque ligne $L_J$ sont séparées d'une distance a variable, la variation $\Delta$a de la distance a entre deux structures consécutives étant d'un ordre de grandeur inférieur à ladite distance a.

4. Dispositif optique comportant au moins un cristal photonique planaire selon la revendication 1, **caractérisé en ce que** les paramètres a et b sont des constantes.

5. Dispositif optique comportant au moins un cristal photonique planaire selon l'une des revendications précédentes, **caractérisé en ce que** les structures nanométriques sont des trous circulaires de dimension identique.

6. Dispositif optique comportant au moins un cristal photonique planaire selon l'une des revendications 1 à 5, **caractérisé en ce que** les structures nanométriques sont des trous circulaires de dimension différente.

7. Dispositif optique comportant au moins un cristal photonique planaire selon l'une des revendications 5 ou 6, **caractérisé en ce que** le diamètre des trous est compris 0.15a et 0.38a.

**Patentansprüche**

1. Optische Vorrichtung, die wenigstens einen planaren photonischen Kristall umfasst, umfassend eine periodische und hexagonale Anordnung von nanometrischen Strukturen, wobei jede elementare Struktur in einem Koordinatensystem (x, y) referenziert ist, wobei das Netzwerk eine Linie, "zentrale Fehlerlinie" genannt, ohne nanometrische Strukturen umfasst, wobei diese Linie auf der x-Achse zentriert ist, wobei jede Struktur $S_{IJ}$ in einem Punkt $C_{IJ}$ von Koordinaten ($x_{CIJ}$, $y_{CIJ}$) zentriert ist, wobei jede nanometrische Struktur zu der Halbebene gehört, bei der y positiv ist, entsprechend einer nanometrischen Struktur, die zu der Halbebene gehört, bei der y negativ ist,

wobei das Netzwerk mehrere Linien $L_J$ von nanometrischen Strukturen $S_{IJ}$ umfasst, deren Mittelpunkte als gemeinsamen Ordinatenwert $y_J$ haben, wobei die Linien parallel zueinander und parallel zur x-Achse sind, wobei jeder Linie $L_J$ der gemeinsamen Ordinate $y_J$ positiv eine Linie $L_{-J}$ der gemeinsamen Ordinate $y_{-J}$ negativ entspricht und mit demselben absoluten Wert wie $y_J$, mit wenigstens einer ersten Linie $L_1$ von nanometrischen Strukturen $S_{I1}$, deren Mittelpunkte als gemeinsamen Ordinatenwert $y_1$, und als Abszissenwerte $k_1$ *a+b haben, wobei der ersten Linie $L_1$ eine erste Linie $L_{-1}$ von nanometrischen Strukturen $S_{I-1}$ entspricht, deren Mittelpunkte als gemeinsamen Ordinatenwert $y_{-1}$ und als Abszissenwerte $k_1$*a-b haben, mit wenigstens einer zweiten Linie $L_3$ von nanometrischen Strukturen $S_{I3}$, deren Mittelpunkte als gemeinsamen Ordinatenwert $y_3$ und als Abszissenwerte $k_2$*a haben, wobei der zweiten Linie $L_3$ eine zweite Linie $L_{-3}$ von nanometrischen Strukturen $S_{I-3}$ entspricht, deren Mittelpunkte als gemeinsamen Ordinatenwert $y_{-3}$ und als Abszissenwerte $k_2$*a haben, und wobei $k_1$ und $k_2$ relative ganze Zahlen sind und b ein Maß kleiner als die Hälfte von a ist, wodurch die Symmetrie des Netzwerks mit Bezug auf die x-Achse gebrochen ist.

**2.** Optische Vorrichtung, die wenigstens einen planaren photonischen Kristall nach Anspruch 1 umfasst, **dadurch gekennzeichnet, dass** einerseits die Strukturen jeder Linie $L_J$ äquidistant sind, wobei die Strukturen um eine vorbestimmte und konstante Distanz a voneinander getrennt sind, und andererseits die Linien $L_J$ äquidistant sind, getrennt um eine vorbestimmte und konstante Distanz $\frac{a.\sqrt{3}}{2}$.

**3.** Optische Vorrichtung, die wenigstens einen planaren photonischen Kristall nach Anspruch 1 umfasst, **dadurch gekennzeichnet, dass** die Strukturen jeder Linie $L_J$ um eine variable Distanz a getrennt sind, wobei die Variation $\Delta a$ der Distanz a zwischen zwei aufeinanderfolgenden Strukturen von einer Größenordnung ist, die kleiner ist als die Distanz a.

**4.** Optische Vorrichtung, die wenigstens einen planaren photonischen Kristall nach Anspruch 1 umfasst, **dadurch gekennzeichnet, dass** die Parameter a und b Konstanten sind.

**5.** Optische Vorrichtung, die wenigstens einen planaren photonischen Kristall nach einem der vorherigen Ansprüche umfasst, **dadurch gekennzeichnet, dass** die nanometrischen Strukturen kreisförmige Löcher von identischer Abmessung sind.

**6.** Optische Vorrichtung, die wenigstens einen planaren photonischen Kristall nach einem der Ansprüche 1 bis 5 umfasst, **dadurch gekennzeichnet, dass** die nanometrischen Strukturen kreisförmige Löcher von unterschiedlicher Abmessung sind.

**7.** Optische Vorrichtung, die wenigstens einen planaren photonischen Kristall nach Anspruch 5 oder 6 umfasst, **dadurch gekennzeichnet, dass** der Durchmesser der Löcher zwischen 0,15a und 0,38a liegt.

**Claims**

**1.** Optical device comprising at least one flat photonic crystal comprising a periodic and hexagonal arrangement of nanometric structures, each elementary structure being referenced in a coordinate system (x, y), the network comprising a line designated as "central defects line" not comprising nanometric structures, this line being centred along the axis x, each structure $S_{IJ}$ being centred on a point $C_{IJ}$ having coordinates $(x_{CIJ}, y_{CIJ})$, with each nanometric structure belonging to the half-plane such that y is positive corresponding to a nanometric structure belonging to the half-plane such that y is negative, the network comprising a plurality of lines $L_J$ of nanometric structures $S_{IJ}$ of which the centres have a shared ordinate value $y_J$, the lines being parallel to each other and parallel to the axis x, where for each shared positive ordinate $y_J$ line $L_J$, there corresponds a shared negative ordinate $y_{-J}$ line $L_{-J}$ and of the same absolute value as $y_J$ with at least one first line $L_1$ of nanometric structures $S_{IJ}$ of which the centres have a shared ordinate value $y_1$ and abscissa values $k_1{*}a+b$, and for said first line $L_1$, there corresponds a first line $L_{-1}$ of nanometric structures $S_{I-1}$ of which the centres have a shared ordinate value $y_{-1}$ and abscissa values $k_1{*}a-b$, with at least one second line $L_3$ of nanometric structures $S_{I3}$ of which the centres have a shared ordinate value $y_3$ and abscissa values $k_2{*}a$, and for said second line $L_3$, there corresponds a second line $L_{-3}$ of nanometric structures $S_{I-3}$ of which the centres have a shared ordinate value $y_{-3}$ and abscissa values $k_2{*}a$, $k_1$ and $k_2$ being relative integers and b a dimension smaller than half of a, the network symmetry in relation to the axis x thus being broken.

**2.** Optical device comprising at least one flat photonic crystal according to claim I, **characterised in that**, firstly, the structures of each line $L_J$ are equidistant, said structures being separated by a predetermined and constant distance a and secondly, the lines $L_J$ are equidistant, separated by a predetermined and constant distance $\frac{a.\sqrt{3}}{2}$.

**3.** Optical device comprising at least one flat photonic crystal according to claim 1, **characterised in that** the structures of each line $L_J$ are separated by a variable distance a, the variation $\Delta a$ of the distance a between two consecutive structures being of an order of magnitude smaller than said distance a.

**4.** Optical device comprising at least one flat photonic crystal according to claim 1, **characterised in that** the parameters a and b are constants.

**5.** Optical device comprising at least one flat photonic crystal according to one of the preceding claims, **characterised in that** the nanometric structures are circular holes of identical dimension.

**6.** Optical device comprising at least one flat photonic crystal according to one of claims 1 to 5, **characterised in that** the nanometric structures are circular holes of differing dimension.

**7.** Optical device comprising at least one flat photonic crystal according to claim 5 or 6, **characterised in**

**that** the diameter of the holes is between 0.15a and 0.38a.

## FIG. 1

## FIG. 2

## FIG. 3

FIG. 4

FIG. 5a

FIG. 5b

FIG. 6

FIG. 7a

FIG. 7b

LONGUEUR
D'ONDE EN NM

1580

1560

1540

1520

$b_{NORM}=0.05$

20      60      100      140

TEMPS EN pS

LONGUEUR
D'ONDE EN NM

1580

1560

1540

1520

$b_{NORM}=0.10$

20      60      100      140

TEMPS EN pS

LONGUEUR
D'ONDE EN NM

1580

1560

1540

1520

$b_{NORM}=0.15$

20      60      100      140

TEMPS EN pS

LONGUEUR
D'ONDE EN NM

1580

1560

1540

1520

$b_{NORM}=0.20$

20      60      100      140

TEMPS EN pS

# FIG. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **L.H. FRANDSEN.** Photonic crystal waveguides with semi-slow light and tailored dispersion properties. *Optics Express,* 02 Octobre 2006, vol. 14 (20
- **Y. HAMACHI.** Slow light with low dispersion and nonlinear enhancement in a lattice-shifted photonic crystal waveguides. *Optics Letters,* 26 Mars 2009, vol. 34 (7
- **S. LÜ et al.** Flat band slow light in asymmetric photonic crystal waveguide based on microfluidic infiltration. *Applied Optics,* 10 Juillet 2010, vol. 49 (20
- **J. MA et al.** Démonstration of Ultraslow Modes in Asymmetric Line-Defect Photonic Crystal Waveguides. *IEEE Photonics Technology Letters,* 15 Juillet 2008, vol. 20 (14